# EUROPÄISCHE PATENTSCHRIFT

(11) **EP 2 628 378 B1**
(45) Veröffentlichungstag und Bekanntmachung des Hinweises auf die Patenterteilung: **16.11.2016**
(21) Anmeldenummer: 13150938.2
(22) Anmeldetag: 11.01.2013
(51) Int. Cl.: A01F 12/16, A01D 41/14, A01D 75/18

(54) **Schutzvorrichtung für ein Schneidwerk eines selbstfahrenden Mähdreschers**
Protection device for a cutting assembly of a self-propelled combine harvester
Dispositif de protection pour une barre de coupe d'une moissonneuse-batteuse autoporteuse

(30) Priorität: 15.02.2012 DE 102012002795
(43) Veröffentlichungstag der Anmeldung: 21.08.2013
(73) Patentinhaber: CLAAS Selbstfahrende Erntemaschinen GmbH, 33428 Harsewinkel (DE)
(72) Erfinder: Brune, Markus, 33428 Marienfeld (DE); Buhne, Hubert, 48324 Sendenhorst (DE)

(56) Entgegenhaltungen:
- EP-A1- 2 436 257
- WO-A1-03/049532
- US-A- 3 722 193
- US-B1- 6 871 483

## Beschreibung

Die Erfindung betrifft einen selbstfahrenden Mähdrescher mit einem Schneidwerk und einer für das Schneidwerk vorgesehenen Schutzvorrichtung, wobei das Schneidwerk einen Schneidtisch mit einem Mähbalken und eine sich daran anschließende Schneidwerksmulde aufweist, und wobei der Schutzvorrichtung eine Messeinrichtung zugeordnet ist.

Schneidwerke von selbstfahrenden Mähdreschern weisen unter anderem eine höhen- sowie zumeist längsverstellbare Haspel sowie eine in Seitenwänden der Schneidwerksmulde gelagerte Einzugsschnecke auf. Diese ist mit gegenläufigen Schneckenabschnitten versehen und fördert das gemähte Erntegut in Richtung einer mittig in einer Rückwand der Schneidwerksmulde angeordneten Eintrittsöffnung. In der Regel ist das Schneidwerk über ein Schnellkuppelsystem mit einem Schrägförderer und entsprechenden Antriebselementen des Mähdreschers verbindbar, so dass das Schneidwerk im Falle einer entsprechenden Schnittbreite für eine Straßenfahrt separat transportiert oder gegen einen anderen Erntevorsatz ausgetauscht werden kann. Der Schrägförderer ist als Kettenförderer ausgebildet und führt das gemähte Erntegut einem Dreschwerk des Mähdreschers zu. Außerdem ist das gesamte Schneidwerk höhenverstellbar am Mähdrescher angeordnet und wird dabei gemeinsam mit dem Schrägförderer über einen Hubzylinder in entsprechende Positionen verschwenkt.

Das Schneidwerk soll im Allgemeinen zum Mähen und zum Aufnehmen unterschiedlicher Getreidearten geeignet sein, wobei der Zustand dieses Erntegutes stark variieren kann. Zum einen kann es sich um Getreidearten mit unterschiedlichen Halmlängen handeln, zum anderen um liegendes Getreide. Letzteres tritt primär dann auf, wenn das bereits reife Getreide starkem Regen ausgesetzt war. Dabei sind die Halme zumeist in Bezug auf die Mährichtung des Schneidwerkes in unterschiedlichen Richtungen geknickt, und es ist dann erforderlich, das Getreide mit geringer Schnitthöhe zu mähen, damit möglichst alle Getreideähren vom Schneidtisch aufgenommen und der nachfolgenden Schneidwerksmulde sowie dem anschließenden Dresch- und Trennvorgang zugeführt werden können.

Wenn das Schneidwerk mit dieser geringen Schnitthöhe betrieben wird, besteht ein erhebliches Risiko, dass zum einen bei vorhandenen Bodenunebenheiten Erde auf das Schneidwerk aufgeschoben wird, oder zum anderen, dass große Steine oder andere Fremdkörper zunächst auf den Mähbalken auftreffen und dann unter Umständen ebenfalls auf das Schneidwerk aufgeschoben werden. Die zuvor erwähnten Bodenunebenheiten können geländebedingt sein, d.h., der Geländeverlauf kann sich in Fahrtrichtung des Mähdreschers quer zu dessen Fahrtrichtung extrem verändern. In letzterem Fall erhöht sich das Risiko, dass Erde auf das Schneidwerk gelangt, auch durch die zumeist relativ große Schnittbreite des Schneidwerks.

Örtliche Bodenunebenheiten können aber auch bei der Bodenbearbeitung entstanden sein, wenn von der entsprechenden Saatbettkombination Erdanhäufungen hinterlassen werden. Die auf das Schneidwerk aufgeschobene Erde führt dazu, dass in diesem Bereich der Erntegutfluss über das Schneidwerk gestört ist, so dass Ernteverluste auftreten. Es besteht dabei die Gefahr, dass der Fahrer des Mähdreschers von seiner Fahrerkabine aus das auf dem Schneidwerk angesammelte Gemisch aus Erde und Halmgut erst relativ spät bemerkt und dass inzwischen bereits Ernteverluste eingetreten sind. Außerdem muss er anschließend das Schneidwerk mit erheblichem Zeit- und Arbeitsaufwand freiräumen, was zu einer langen Unterbrechung des Erntevorganges führt. Steine oder andere Fremdkörper, auf die das Schneidwerk auftrifft, können je nach Größe zum einen den Mähbalken, die Einzugsschnecke oder den Schrägförderer beschädigen, und sie können zum anderen in das Dreschwerk gelangen, in dem sie erhebliche Schäden an der Dreschtrommel und am Abscheidekorb hervorrufen.

Ein selbstfahrender Mähdrescher mit einem Schneidwerk und einer für das Schneidwerk vorgesehenen Schutzvorrichtung der im Oberbegriff des Patentanspruchs 1 genannten Gattung ist aus der US 3,675,660 A bekannt. Die Schneidwerksmulde dieses Schneidwerks ist in ihrem an den Schrägförderer grenzenden Bereich des Bodens mit einem Detektor versehen, der im Erntegut Steine und andere Fremdkörper ermittelt, die bereits von dem Schneidwerk aufgenommen wurden, wobei diese Bestandteile akustische Schwingungen am Detektor hervorrufen sollen, die in elektrische Signale umgesetzt werden. Im Boden des Schrägförderers, über den dessen Förderleisten den Gutstrom transportieren, ist eine Klappe vorgesehen, die im Falle eines detektierten Steines oder eines anderen Fremdkörpers und dem daraufhin auftretenden Signals geöffnet wird, um diesen Bestandteil zu entfernen.

Ein selbstfahrender Mähdrescher mit einem Schneidwerk und einer für das Schneidwerk vorgesehenen Schutzvorrichtung gemäß dem Oberbegriff des Anspruches 1 ist aus dem US-Patent 6,871,483 B1 bekannt.

Es ist Aufgabe der vorliegenden Erfindung, eine Schutzvorrichtung für ein Schneidwerk eines selbstfahrenden Mähdreschers zu schaffen, mittels welcher verhindert werden kann, dass Erde oder Steine auf das Schneidwerk aufgeschoben werden oder dass Steine sowie andere Fremdkörper den Mähbalken, die Einzugsschnecke oder das Dreschwerk beschädigen.

Diese Aufgabe wird, ausgehend vom Oberbegriff des Patentanspruchs 1 in Verbindung mit dessen kennzeichnenden Merkmalen gelöst. Es ist vorgesehen, dass die Messeinrichtung zur Überwachung einer entgegen der Mährichtung auf das Schneidwerk ausgeübten Kraft vorgesehen ist, wobei die Messeinrichtung mit einer Steuereinrichtung verbunden ist. Über die Messeinrichtung wird folglich überwacht, ob an der vorderen Kante des Mähbalkens ein Widerstand auftritt, wobei dann auf das in dieser Richtung betriebene Schneidwerk eine Kraft mit einem horizontalen Verlauf ausgeübt wird. Bei Überschreiten eines Schwellwertes registriert die Schutzvorrichtung diese Krafteinleitung als Signal für einen Bodenkontakt des Mähbalkens oder dessen Auftreffen auf einen großen Stein oder einen anderen Fremdkörper. Es kann also durch ein frühzeitiges Erfassen dieses Problems verhindert werden, dass Erde, Steine oder andere Fremdkörper auf das Schneidwerk aufgeschoben werden.

Demgegenüber werden bei der Schutzvorrichtung nach der US 3,675,660 A von dem am Ende der Schneidwerksmulde angeordneten Detektor nur Steine erfasst, die bereits in den Schrägförderer gelangen. Es wird also mittels dieser Schutzvorrichtung nicht verhindert, dass Erde oder Steine in größeren Mengen auf das Schneidwerk aufgeschoben werden. Auch bei Verwendung dieser Schutzvorrichtung wird der Fahrer des Mähdreschers gezwungen sein, von Zeit zu Zeit die auf das Schneidwerk aufgeschobene Erde, Steine usw. mit großem Zeitaufwand zu entfernen.

Erfindungsgemäß ist der Schneidtisch gegenüber der Schneidwerksmulde in und entgegen einer Mährichtung längsbeweglich geführt, wobei die Messeinrichtung zwischen dem Schneidtisch und der Schneidwerksmulde angeordnet ist. Eine derartige Verstellmöglichkeit des Schneidtisch ist bei modernen Mähdreschern vorgesehen, um eine Einstellung einer optimalen Lage des Mähwerks in Bezug auf die Haspel und die Einzugsschnecke zu ermöglichen, die für die Ernte unterschiedlicher Getreidesorte, deren Halmlängen sich unterscheiden, oder für das Schneiden und Ernten von Raps zu variieren ist.

Für einen geringen Verlust des zu erntenden Halmgutes und zur Verhinderung von Verstopfungen ist nämlich eine Einstellung einer optimalen Lage des Mähwerks in Bezug auf die Haspel und die Einzugsschnecke erforderlich. Zu diesem Zweck wird der Schneidtisch gegenüber der Schneidwerksmulde separat ausgebildet und über eine Stelleinrichtung in Mährichtung verstellt, so dass unterschiedliche Lagen des Mähwerks gegenüber der Einzugsschnecke bestimmbar sind. Mittels der erfindungsgemäßen Messeinrichtung, die zwischen dem Schneidtisch und der Schneidwerksmulde angeordnet sowie mit der Steuereinrichtung verbunden ist, kann eine Verschiebung des Schneidtisches, die durch ein Auftreffen des Mähbalkens auf ein Hindernis ausgelöst wird, ermittelt werden.

Weiterhin ist vorgesehen, dass die Steuereinrichtung mit einer akustischen oder optischen Anzeige in einer Fahrerkabine des Mähdreschers verbunden ist und/oder Bestandteil einer Hubwerksregelung des Schneidwerkes ist und/oder Bestandteil einer Regelung eines Fahrantriebes des selbstfahrenden Mähdreschers ist. Vorzugsweise dürfte der Fahrantrieb des Mähdreschers gestoppt werden, woraufhin der Fahrer Gelegenheit hat, die Schnitthöhe des Schneidwerkes zu korrigieren, um das Hindernis zu überwinden.

Im Falle einer getrennten Ausbildung von Schneidtisch und Schneidwerksmulde kann der Schneidtisch mittels zumindest eines Hydraulikzylinders gegenüber der Schneidwerksmulde verschiebbar sein, wobei über die Messeinrichtung ein Hydraulikdruck in dem zumindest einen Hydraulikzylinder ermittelbar ist. Tritt in dem Druckraum des Hydraulikzylinders oder in einer an diesen angeschlossenen Druckleitung während des Erntevorganges ein Druckanstieg auf, welcher einen vorgegebenen Schwellwert überschreitet, so kann dieser mittels der Messeinrichtung ermittelt und daraus das Auftreffen des Mähbalkens auf ein Hindernis hergeleitet werden. Da bei Schneidwerken mit relativ großer Schnittbreite mehrere Hydraulikzylinder für die Längsverstellung des Schneidtisches vorgesehen sind, kann an jedem dieser Hydraulikzylinder eine Messeinrichtung vorgesehen sein, wobei die Möglichkeit besteht, über eine elektronische Auswertung festzustellen und dem Fahrer optisch zu signalisieren, in welchem Bereich des Schneidwerkes eine horizontale Kraft auf den Schneidtisch wirkt.

Da neben der hydraulischen Verstellung des Schneidtisches auch andere lineare Stellelemente verwendet werden können, sollen gemäß einer weiteren Ausgestaltung der Schneidtisch sowohl der Hydraulikzylinder als auch ein anderes lineares Stellelement über ein Abstützelement an der Schneidwerksmulde abgestützt sein, und die Messeinrichtung soll im Bereich einer der Anlenkungen des Abstützelements am Schneidtisch oder an der Schneidwerksmulde angeordnet sein. Dabei kann am Abstützelement ein Federelement angeordnet sein. Dieses Federelement befindet sich zwischen dem Abstützelement einerseits und dem Schneidtisch oder der Schneidwerksmulde andererseits. Über die dem Federelement parallel geschaltete Messeinrichtung wird mit einfachen Mitteln ein kraftabhängiger Weg ermittelt.

Weiterhin kann das Federelement als Blattfeder, Biegestabfeder oder Drehstabfeder ausgebildet sein. Entsprechende Ausbildungen von Federn mit parallel zu diesen angeordneten Messeinrichtungen sind unter anderem bekannt in der Anwendung in Zugkraftregelungen von Ackerschleppern. Schließlich besteht aber auch die Möglichkeit, am Abstützelement einen Kraftmessbolzen vorzusehen, über den beispielsweise der Hydraulikzylinder mit dem Abstützelement gekuppelt ist.

Die Erfindung ist nicht auf die angegebene Kombination der Merkmale des Patentanspruchs 1 mit den Merkmalen der von diesem abhängigen Patentansprüchen beschränkt. Es ergeben sich darüber hinaus weitere Möglichkeiten, einzelne Merkmale, insbesondere dann, wenn sie sich aus den Patentansprüchen der nachfolgenden Beschreibung der Ausführungsbeispiele oder unmittelbar aus der Zeichnung ergeben, miteinander zu kombinieren. Außerdem soll die Bezugnahme der Patentansprüche auf die Zeichnung durch die Verwendung von Bezugszeichen den Schutzumfang der Patentansprüche auf keinen Fall auf die dargestellten Ausgestaltungsbeispiele beschränken.

Weitere Merkmale der Erfindung ergeben sich im Übrigen aus der nachfolgenden Beschreibung und aus der Zeichnung, in der zwei Ausführungsbeispiele der Erfindung vereinfacht dargestellt sind.

Es zeigen:
- Figur 1: eine Seitenansicht eines Schneidwerks mit einem Teilschnitt im Bereich einer Einzugsschnecke, wobei eine erfindungsgemäße Messeinrichtung an einem Hydraulikzylinder angeordnet ist und
- Figur 2: ein Abstützelement, das über einen Kraftmessbolzen an einem benachbarten Bauteil angreift.

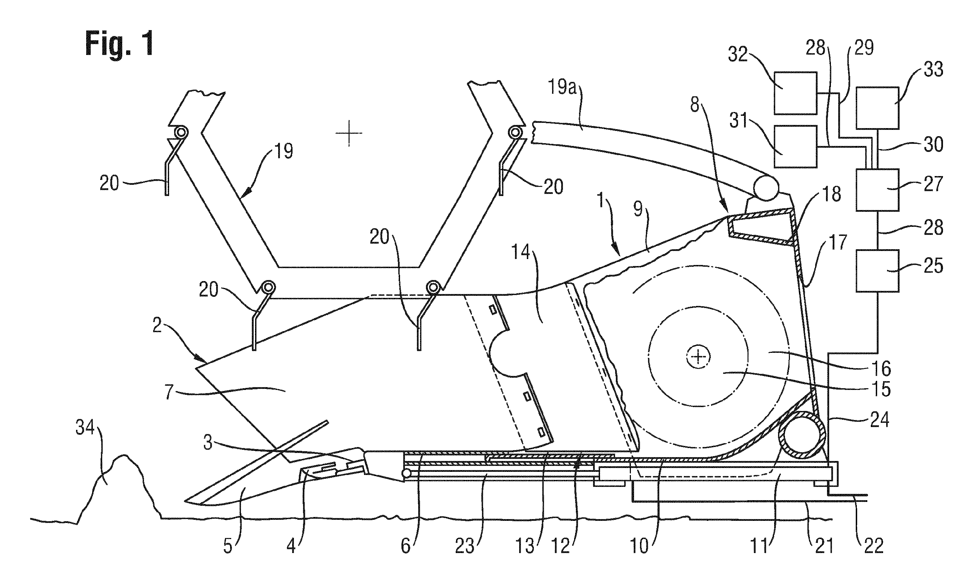

In der Figur 1 ist mit 1 ein Schneidwerk eines selbstfahrenden Mähdreschers bezeichnet, das einen Schneidtisch 2 mit einem daran ausgebildeten Mähbalken 3 aufnimmt. Dabei besteht der Mähbalken 3 aus einer Vielzahl von in einer Reihe angeordneten Fingern 4, in denen ein nicht näher dargestellter oszillierend angetriebener Messerbalken geführt ist. Außerdem sind an dem Schneidtisch 2 zwei Halmteiler 5 befestigt, von denen in der Darstellung nur einer sichtbar ist. Der Schneidtisch 2 besteht im Wesentlichen aus einem Boden 6 und Seitenwänden 7, die den Schneidtisch 2 in seiner Breite begrenzen.

Außerdem ist der Schneidtisch 2 längsverstellbar an einer Schneidwerksmulde 8 geführt, die Seitenwände 9 und ein Bodenblech 10 aufweist, wobei ein Hydraulikzylinder 11, der mit seinem einen Ende an der Schneidwerksmulde 8 und seinem anderen Ende am Schneidtisch 2 angreift, diese Längsverstellung des Schneidtisches 2 bewirkt. Für die Verstellung des Schneidtisches 2 sind mehrere dieser Hydraulikzylinder 11 vorgesehen. Da es sich um einen relativ langen Verstellweg handelt, ist zwischen dem Schneidtisch 2 und der Schneidwerksmulde 8 ein ebenfalls längsbewegliches Zwischenteil 12 angeordnet, dessen Boden 13 sich zwischen dem Boden 6 des Schneidtisches 2 und dem Bodenblech 10 parallel zu diesen erstreckt. Das Gleiche gilt für Seitenwände 14 des Zwischenteils 12, und somit sind das Zwischenteil 12 und der Schneidtisch 2 insgesamt teleskopisch gegenüber der Schneidwerksmulde 8 verstellbar.

Die Schneidwerksmulde 8 nimmt eine Einzugsschnecke 15 auf, die sich über die gesamte Breite des Schneidwerks 1 erstreckt. Von dieser Einzugsschnecke 15 wird das gemähte Erntegut erfasst und mittels gegenläufiger schneckenförmiger Mitnehmer 16 zur Mitte der Schneidwerksmulde 8 hin gefördert, wo das Erntegut über eine Durchtrittsöffnung 17 in einer Rückwand 18 der Schneidwerksmulde 8 in einen nicht näher dargestellten Schrägförderer gelangt.

Der Transport des gemähten Erntegutes in Richtung der Einzugsschnecke wird dabei über eine Haspel 19 unterstützt, die die Ähren des Erntegutes mittels Zinken 20 erfasst und bereits während des Mähvorgangs in Richtung der Einzugsschnecke 15 auf dem Schneidwerk 1 ablegt. Diese Haspel 19 ist mittels schwenkbarer Arme 19a höhenverstellbar am Schneidwerk 1 geführt. Außerdem lässt sich die Stellung der Haspel 19 auch in Längsrichtung des Mähdreschers verändern.

Wie aus der Figuren 1 hervorgeht, lässt sich durch diese Anordnung von Schneidtisch 2 und Zwischenteil 12 gegenüber der Schneidwerksmulde 8 eine Verstellung des Schneidwerks 1 realisieren, mittels welcher das Schneidwerk 1 an unterschiedliche Arten und Zustände des Erntegutes angepasst werden kann. Der zumindest eine Hydraulikzylinder 11 ist dabei als doppeltwirkender Hydraulikzylinder ausgebildet und steht über Hydraulikleitungen 21 und 22 mit einem nicht dargestellten Wegeventil in Verbindung, so dass der Schneidtisch 2 je nach Druckaufbau in einem der Druckräume des Hydraulikzylinders 11 in Fahrtrichtung oder entgegen der Fahrtrichtung des Mähdreschers verlagert wird. Dabei greift eine Kolbenstange 23 des jeweiligen Hydraulikzylinders 11 an einem in Richtung der Schneidwerksmulde 8 weisenden Ende des Schneidtisches 2 an.

Bei dem Ausgestaltungsbeispiel der Erfindung nach der Figur 1 steht der Druckraum des Hydraulikzylinders 11, der an dessen in Richtung der Schneidwerksmulde 8 weisenden Ende liegt, mit einer Steuerleitung 24 in Verbindung. Diese Steuerleitung 24 führt zu einer Messeinrichtung 25, die den Druck in dem Druckraum des Hydraulikzylinders 11 überwacht. Außerdem steht die Messeinrichtung 25 über eine Leitung 26 mit einer Steuereinrichtung 27 in Verbindung, von welcher Signalleitungen 28, 29 und 30 zu eine akustischen und/oder optischen Anzeige 31 in einer Fahrerkabine des Mähdreschers, zu einer Hubwerksregelung 32 des Schneidwerks 1 und zu einer Fahrantriebsregelung 33 des Mähdreschers führen.

Trifft der Mähbalken 3 auf ein Hindernis auf, das in der Figur 1 als Erdhaufen 34 symbolisiert ist, so wird auf den Schneidtisch 2 eine entgegen der Fahrtrichtung des Mähdreschers wirkende Kraft ausgeübt, die zu einem Druckanstieg im Druckraum des Hydraulikzylinders 11 führt. Dieser Druckanstieg wird über die Messeinrichtung 25 erfasst und als entsprechendes Signal über die Leitung 26 an die Steuereinrichtung 27 übermittelt. Wird ein Schwellwert, der ein Indiz dafür ist, dass der Mähbalken 3 auf einen entsprechende Erdhaufen 34 oder ein anderes Hindernis auftrifft, so sendet die Steuereinrichtung 27 ein entsprechendes Signal über die Signalleitungen 28, 29 und 30 an die Anzeige 31 in der Fahrerkabine, an die Hubwerksregelung 32 und an die Fahrantriebsregelung 33. Wenn alle drei Funktionen aktiviert werden, so wird der Fahrer davor gewarnt, dass der Erdhaufen 34 auf das Schneidwerk auf das Schneidwerk 1 aufgeschoben wird, und es werden gleichzeitig der Fahrantrieb des Mähdreschers gestoppt sowie das Schneidwerk 1 angehoben. Selbstverständlich können auch nur einzelne dieser Funktionen ausgelöst werden. Ferner ist es sinnvoll, für den Fahrer eine Einstellmöglichkeit zu schaffen, mit der er den Schwellwert vorwählen kann.

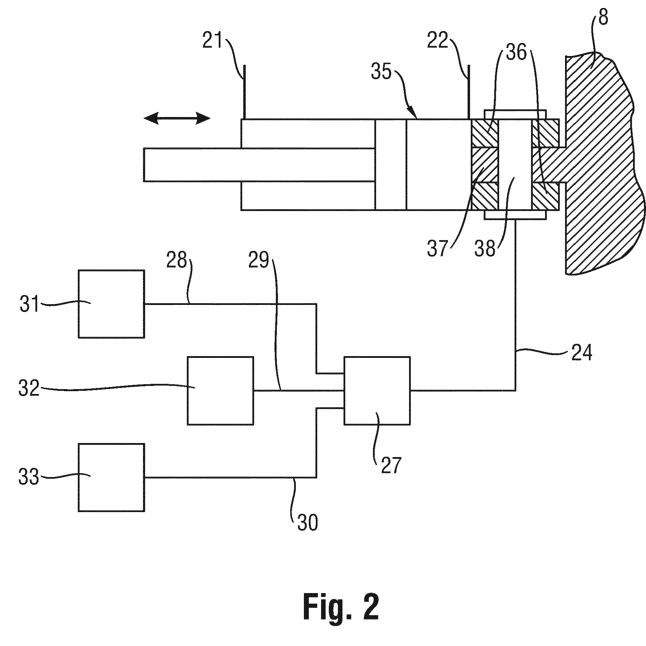

Ein weiteres Ausgestaltungsbeispiel der Erfindung ist in der Figur 2 dargestellt. In diesem Fall soll für die Längsverschiebung des Schneidtisches ein Abstützelement 35 vorgesehen sein, das in dieser Darstellung ebenfalls als doppeltwirkender Hydraulikzylinder ausgebildet ist. Selbstverständlich kann es sich dabei um jede Art eines linearen Stellantriebes handeln. Das Abstützelement weist ein gabelförmiges Ende 36 auf, welches eine von der Schneidwerksmulde ausgehende Lasche 37 übergreift. Das gabelförmige Ende 36 und die Lasche 37 sind über einen Kraftmessbolzen 38 aneinander fixiert.

Ein derartiger Kraftmessbolzen 38 ermöglicht eine Messung der auf ihn übertragenen Querkräfte, wobei diese Messung mit Hilfe von Dehnungsmessstreifen oder Magnetspulen erfolgen kann. Dabei steht der Kraftmessbolzen wiederum in Übereinstimmung mit der Anordnung nach der Figur 1 über die Leitung 26 mit der Steuereinrichtung 27 in Verbindung. Von der Steuereinrichtung 27 führen ebenfalls Signalleitungen 28, 29 und 30 zur Anzeige 31, zur Hubwerksregelung 32 und zur Fahrantriebsregelung 33.

Darüber hinaus besteht die Möglichkeit, die am Schneidtisch auftretende Kraft mittels einer als Kraft-Weg-Messsystem ausgebildeten Messeinrichtung zu bestimmen. In diesem Fall soll das Abstützelement über ein Federelement an der Schneidwerksmulde oder am Schneidtisch abgestützt sein. Dabei ermittelt die Messeinrichtung den entsprechenden Weg der Einfederung und leitet daraus eine Kraft ab. Entsprechende Messeinrichtungen mit Blattfedern, Biegestabfedern oder Drehstabfedern werden beispielsweise bei Zugkraftregelungen an Ackerschleppern eingesetzt.

**Bezugszeichenliste**

| | | | |
|---|---|---|---|
| 1 | Schneidwerk | 20 | Zinken |
| 2 | Schneidtisch | 21 | Hydraulikleitung |
| 3 | Mähbalken | 22 | Hydraulikleitung |
| 4 | Finger | 23 | Kolbenstange |
| 5 | Halmteiler | 24 | Steuerleitung |
| 6 | Boden von 2 | 25 | Messeinrichtung |
| 7 | Seitenwände von 2 | 26 | Leitung |
| 8 | Schneidwerksmulde | 27 | Steuereinrichtung |
| 9 | Seitenwände von 8 | 28 | Signalleitung |
| 10 | Bodenblech von 8 | 29 | Signalleitung |
| 11 | Hydraulikzylinder | 30 | Signalleitung |
| 12 | Zwischenteil | 31 | Anzeige |
| 13 | Boden von 12 | 32 | Hubwerksregelung |
| 14 | Seitenwände von 12 | 33 | Fahrantriebsregelung |
| 15 | Einzugsschnecke | 34 | Erdhaufen |
| 16 | Mitnehmer von 15 | 35 | Abstützelement |
| 17 | Durchtrittsöffnung | 36 | gabelförmiges Ende |
| 18 | Rückwand | 37 | Lasche |
| 19 | Haspel | 38 | Kraftmessbolzen |
| 19a | Arme | | |

## Patentansprüche

1. Selbstfahrender Mähdrescher mit einem Schneidwerk (1) und einer für das Schneidwerk (1) vorgesehenen Schutzvorrichtung, wobei das Schneidwerk (1) einen Schneidtisch (2) mit einem Mähbalken (3) und eine sich daran anschließende Schneidwerksmulde (8) aufweist, und wobei der Schutzvorrichtung eine Messeinrichtung (25) zugeordnet ist, die zur Überwachung einer entgegen der Mährichtung auf das Schneidwerk (1) ausgeübten Kraft vorgesehen ist, wobei die Messeinrichtung (25) mit einer Steuereinrichtung (27) verbunden ist,
**dadurch gekennzeichnet, dass**
der Schneidtisch (2) gegenüber der Schneidwerksmulde (8) in und entgegen einer Mährichtung längsbeweglich geführt ist, und dass die Messeinrichtung (25) zwischen dem Schneidtisch (2) und der Schneidwerksmulde (8) angeordnet ist.

2. Selbstfahrender Mähdrescher nach Anspruch 1, **dadurch gekennzeichnet, dass** die Steuereinrichtung (27) mit einer akustischen oder optischen Anzeige (31) in einer Fahrerkabine des Mähdreschers verbunden ist und/oder Bestandteil einer Hubwerksregelung (32) des Schneidwerkes (1) ist und/oder Bestandteil einer Regelung (33) eines Fahrantriebes des selbstfahrenden Mähdreschers ist.

3. Selbstfahrender Mähdrescher nach Anspruch 1, **dadurch gekennzeichnet, dass** der Schneidtisch (2) mittels zumindest eines Hydraulikzylinders (11) gegenüber der Schneidwerksmulde (8) verschiebbar ist und dass über die Messeinrichtung (25) ein Hydraulikdruck in dem zumindest einen Hydraulikzylinder (11) ermittelbar ist.

4. Selbstfahrender Mähdrescher nach Anspruch 1, **dadurch gekennzeichnet, dass** der Schneidtisch (2) über ein Abstützelement (35) an der Schneidwerksmulde (8) abgestützt ist und dass die Messeinrichtung im Bereich einer der Anlenkungen (36, 37) des Abstützelements (35) angeordnet ist.

5. Selbstfahrender Mähdrescher nach Anspruch 4, **dadurch gekennzeichnet, dass** am Abstützelement (35) ein Federelement angeordnet ist.

6. Selbstfahrender Mähdrescher nach Anspruch 4, **dadurch gekennzeichnet, dass** am Abstützelement (35) ein Kraftmessbolzen (38) vorgesehen ist.

7. Selbstfahrender Mähdrescher nach Anspruch 5, **dadurch gekennzeichnet, dass** das Federelement als Blattfeder ausgebildet ist.

8. Selbstfahrender Mähdrescher nach Anspruch 5, **dadurch gekennzeichnet, dass** das Federelement als Biege- oder Drehstabfeder ausgebildet ist.

## Claims

1. A self-propelled combine harvester comprising a header (1) and a protection device provided for the header (1), wherein the header (1) has a cutting table (2) with a cutter bar (3) and a header tray (8) adjoining same, and wherein associated with the protection device is a measuring device (25) for monitoring a force applied to the header (1) in opposite relationship to the cutting direction, wherein the measuring device (25) is connected to a control device (27),
**characterised in that**
the cutting table (2) is longitudinally moveably guided in relation to the header tray (8) in and in opposite relationship to a cutting direction and that the measuring device (25) is arranged between the cutting table (2) and the header tray (8).

2. A self-propelled combine harvester according to claim 1 **characterised in that** the control device (27) is connected to an acoustic or optical display (31) in a driver cab of the combine harvester and/or is a constituent part of a lift mechanism regulating system (32) of the header (1) and/or a constituent part of a regulating system (33) of a travel drive of the self-propelled combine harvester.

3. A self-propelled combine harvester according to claim 1 **characterised in that** the cutting table (2) is displaceable by means of at least one hydraulic cylinder (11) with respect to the header tray (8) and that a hydraulic pressure in the at least one hydraulic cylinder (11) can be ascertained by way of the measuring device (25).

4. A self-propelled combine harvester according to claim 1 **characterised in that** the cutting table (2) is supported at the header tray (8) by way of a support element (35) and that the measuring device is arranged in the region of one of the pivot mountings (36, 37) of the support element (35).

5. A self-propelled combine harvester according to claim 4 **characterised in that** a spring element is arranged at the support element (35).

6. A self-propelled combine harvester according to claim 4 **characterised in that** a force measuring pin (38) is provided at the support element (35).

7. A self-propelled combine harvester according to claim 5 **characterised in that** the spring element is in the form of a leaf spring.

8. A self-propelled combine harvester according to claim 5 **characterised in that** the spring element is in the form of a flexural or torsion bar spring.

## Revendications

1. Moissonneuse-batteuse automotrice comprenant un tablier de coupe (1) et un dispositif de protection prévu pour le tablier de coupe (1), le tablier de coupe (1) comportant une table de coupe (2) avec une barre de coupe (3) et un bac de tablier de coupe (8) s'y raccordant, et un dispositif de mesure (25) étant associé au dispositif de protection, lequel est prévu pour surveiller une force exercée sur le tablier de coupe (1) à l'opposé de la direction de moissonnage, le dispositif de mesure (25) étant relié à un dispositif de commande (27), **caractérisée en ce que** la table de coupe (2) est guidée mobile longitudinalement par rapport au bac de tablier de coupe (8) dans et à l'opposé d'une direction de moissonnage, et **en ce que** le dispositif de mesure (25) est disposé entre la table de coupe (2) et le bac de tablier de coupe (8).

2. Moissonneuse-batteuse automotrice selon la revendication 1, **caractérisée en ce que** le dispositif de commande (27) est relié à un moyen d'indication acoustique ou optique (31) disposé dans une cabine de conduite de la moissonneusebatteuse et/ou fait partie d'un moyen de régulation du mécanisme de relevage (32) du tablier de coupe (1) et/ou fait partie d'un moyen de régulation (33) d'un groupe propulseur de la moissonneuse-batteuse automotrice.

3. Moissonneuse-batteuse automotrice selon la revendication 1, **caractérisée en ce que** la table de coupe (2) est déplaçable par rapport au bac de tablier de coupe (8) au moyen d'au moins un vérin hydraulique (11), et **en ce que** le dispositif de mesure (25) permet de déterminer une pression hydraulique dans ledit au moins un vérin hydraulique (11).

4. Moissonneuse-batteuse automotrice selon la revendication 1, **caractérisée en ce que** la table de coupe (2) prend appui sur le bac de tablier de coupe (8) par l'intermédiaire d'un élément d'appui (35), et **en ce que** le dispositif de mesure est disposé dans la zone d'une des articulations (36, 37) de l'élément d'appui (35).

5. Moissonneuse-batteuse automotrice selon la revendication 4, **caractérisée en ce qu'**un élément formant ressort est disposé sur l'élément d'appui (35) .

6. Moissonneuse-batteuse automotrice selon la revendication 4, **caractérisée en ce qu'**un capteur d'effort (38) est prévu sur l'élément d'appui (35) .

7. Moissonneuse-batteuse automotrice selon la revendication 5, **caractérisée en ce que** l'élément formant ressort est réalisé sous la forme d'un ressort à lame.

8. Moissonneuse-batteuse automotrice selon la revendication 5, **caractérisée en ce que** l'élément formant ressort est réalisé sous la forme d'un ressort de flexion ou de torsion.
